(19) Europäisches Patentamt
European Patent Office
Office européen des brevets

(11) Publication number: **0 249 201**
**A2**

(12) # EUROPEAN PATENT APPLICATION

(21) Application number: 87108335.8

(22) Date of filing: 10.06.87

(51) Int. Cl.³: C 09 D 3/58
C 09 D 5/04, C 08 G 59/24

(30) Priority: 10.06.86 US 872391

(43) Date of publication of application:
16.12.87 Bulletin 87/51

(84) Designated Contracting States:
AT BE CH DE ES FR GB IT LI NL SE

(71) Applicant: UNION CARBIDE CORPORATION
39 Old Ridgebury Road
Danbury Connecticut 06817(US)

(72) Inventor: Kubisen, Steven J., Jr.
68 Riverbend Drive
North Brunswick New Jersey 08902(US)

(72) Inventor: Eaton, Robert F.
Mill Pond Road
Belle Mead New Jersey 08502(US)

(74) Representative: Wuesthoff, Franz, Dr.-Ing. et al,
Patentanwälte Wuesthoff-v. Pechmann
-Behrens-Goetz-v. Hellfeld Schweigerstrasse 2
D-8000 München 90(DE)

(54) **High solids sag resistant cycloaliphatic epoxy coatings containing low molecular weight high Tg organic polymeric sag resisting additives.**

(57) Sprayable, thermosetting, sag-resistant coating composition comprising at least 50 weight percent nonvolatiles comprising: (a) 100 weight parts of a crosslinkable cycloaliphatic epoxy containing at least one cycloaliphatic ring, (b) 0 to 100 weight parts of a crosslinking/chain-extending agent compatible with and capable of crosslinking and/or chain-extending said epoxy, and (c) a sag control system comprising 5 to 40 weight parts of an organic polymer having a glass transition temperature of at least 25°C and a number average molecular weight of not more than 12,000.

EP 0 249 201 A2

Croydon Printing Company Ltd.

0249201

# HIGH SOLIDS SAG RESISTANT CYCLOALIPHATIC EPOXY COATINGS CONTAINING LOW MOLECULAR WEIGHT HIGH Tg ORGANIC POLYMERIC SAG RESISTING ADDITIVES

## BACKGROUND OF THE INVENTION

### 1. Field of the Invention

The present invention relates to flow control systems for reducing sag in coating compositions comprising cycloaliphatic epoxides. More in particular, the present invention relates to flow control systems for cycloaliphatic epoxy coating compositions organic polymers having a number average molecular weight of not more than 12,000 and a glass transition temperature of at least 25$^{o}$C.

### 2. Description of the Prior Art

The decline of the environment has spawned ever-increasing awareness concerning hazardous, toxic and polluting conditions. Statutes and regulations have been, and are now, being enacted to regulate, among other places, the industrial workplace. Emission controls apply not only to internal combustion engines and power plant exhaust stacks but to vapors being emitted by coating compositions as they are prepared, applied to substrates and subsequently cured. Emission controls have become increasingly more strict and in

response, significant efforts have been directed to creating high solids coating compositions containing reduced amounts of non-reactive volatile diluents and unpolymerized volatile monomers.

New problems have arisen with the new generation of high solids coatings. This is especially true in high solids coating systems having prepolymer resins or resins which are crosslinked during the curing phase. Without the ability to use uncontrolled amounts of non-reactive volatile diluents, e.g., organic solvents, with the systems, viscosity control has become a major concern. Viscosity control is important for a number of coating application methods including air spray, airless spray, electrostatic spray, roller coating, dip coating and curtain coating. The high solids coating systems must be useful for such methods as power (e.g. air atomized or airless) spray painting large vertical metal substrates. High solids coating compositions which are too viscous are not economically feasible as they cannot be readily used in power sprayers. When high solids coating compositions have a viscosity which is compatible with methods for power spraying vertical metal substrates, too thick a coating of low viscous material causes sagging. Sag resistance is a major problem with high solids coatings.

Sag is defined as the undesirable flow of the coating on vertical or near-vertical surfaces to produce films of unequal thickness. The phenomenon of sagging may be measured with each particular coating composition as sag resistance. Sag resistance is that thickness of coating upon a vertical surface which may be applied without that particular thickness sagging. Thus, a high solids coating composition must be of sufficiently low viscosity to be applied by power sprayers yet sufficiently sag-resistant to permit a reasonably thick coating upon a vertical metal substrate without sagging.

Increasingly strict emission controls have resulted in the development of high solids coatings such as those based on cycloaliphatic epoxide crosslinked or chain extended with polyols. Such epoxy compositions are highly desirable for coating substrates because extremely durable coatings are achievable. Such epoxy compositions are very compatible with power spraying techniques as they have a very low viscosity; however, they require heat to initiate crosslinking or chain extended with many available catalyst systems. Heating of the substrate and coating causes the viscosity of the coating to further decrease and the occurrence of the sag phenomenon to increase. Thus, the use of epoxy compositions as high solids coating compositions is very

challenging because the heat-curing process exacerbates the sag phenomenon.

A common method used heretofore to control sag was to blend a small amount of a higher molecular weight polymer with the low molecular weight oligomers in the coating compositions. The higher viscosity of the high molecular weight polymeric additive is often sufficient to control sag. At the same time the higher viscosity requires the addition of more solvent to thin to application viscosity which is undesirable because it promotes sag and defeats the purpose of high solids compositions which is to reduce the amount of volatiles emitted after application to the substrate. Typical high molecular weight polymers which can be used are the cellulose acetate butyrate resins, phenoxy resins and the vinyl chloride-vinyl acetate copolymer or terpolymer resins.

Other types of additives heretofore used to control sag are silicas of various types. These generally reduce gloss to an undesirable level. Many other types of sag-control additives commercially available are based on derivatives of castor oil. All of those tested reportedly were found to be incompatible with cycloaliphatic epoxides. Another type of sag-control additive is the acrylic microgel concentrate which is

described as a dispersion of hydroxyl-containing acrylic microgel in a polymer solution. When these acrylic microgel additives are used in cycloaliphatic epoxide coatings, they impart no sag resistance at all.

U. S. - A - 4,522,958 and 4,526,910 describe high solids epoxy coating compositions using inorganic microparticles, e.g., silica, for sag control. The silica microparticles, it is taught, avoids having to use organic microgels to prevent sagging. U. S. - A - 4,522,958 uses carbon-containing molecules, e.g., aliphatic alcohol radicals, chemically bonded to the inorganic microparticles at the surface of the microparticles. U. S. = A - 4,526,910 uses inorganic particles which are essentially free of carbon-containing molecules chemically bonded to the surface thereof.

U. S. - A - 4,290,932 and 4,377,661 have identical disclosures directed to solving sag problems in polymer coating systems by the addition of acrylic microgels which are stable dispersions of microparticles in an organic solvent, usually 0.05 to 10 µm in size and composed of a polymer crosslinked to the extent that it is insoluble in the organic solvent in which the particles are dispersed. It is taught that microgels allow for higher

solids content in acrylic polymer coating compositions without raising viscosity. Pigment orientation is improved and sag resistance is controlled, it is taught, by carefully selecting a crosslinking agent which can cause the microgels to react with the acrylic coating composition.

U. S. - A - 4,540,734 teaches controlling sag problems in polyurethane clearcoat compositions by adding a flow control system composed of urea thixotrope/acrylic microgel additives (e.g., a lightly crosslinked polymethyl methacrylate). Other microgels may be used, such as, polystyrene, polyethylene or polybutadiene microgels. This patent teaches that the microgels act as tie molecules by providing sites for attachment by secondary bonding associations of the clear coat system, wherein secondary bonding is between polyurethane resin, thixotrope and the microgel before the paint is cured. The solution to the sag problem taught by said patent is limited to polyurethane systems since the sag control system is designed to react specifically with hydroxy terminated urethane bonder resins.

U. S. - A - 4,479,990 is an improvement patent designed to improve upon the teaching of U. S. - A - 4,102,851 . Here,

cycloaliphatic epoxides are used to coat the inside of conduits used for channeling sulfur hexafluoride gas to open circuit breakers to diminish arcing phenomenon and sag control in the coating is critical. The cycloaliphatic epoxy resin has a backbone structure which comprises two cycloaliphatic rings joined by a bridge structure that does not contain more than five atoms in the direct chain between the rings, each cycloaliphatic ring having an epoxy oxygen connected to a pair of vicinal carbon atoms. To the cycloaliphatic epoxy resin is added a flexibilizing agent of polyazelaic polyanhydride or hexahydrophthalic anhydride and a filler material such as aluminum trihydrate or magnesite. The sag-resisting material, or thixotroping agent, is finely divided aluminum oxide, i.e., $Al_2O_3$.

U. S. - A - 4,539,348 and 4,546,014 teach stabilizing high solids film forming resins with water-swellable microgel polymer particles, e.g., made from a polymerizable carboxylic acid monomer, e.g., methacrylic acid, a difunctional crosslinking monomer, e.g., ethylene glycol dimethacrylate, and one or more carboxyl-free relatively, water-insoluble polymerizable vinyl monomer, e.g., alkyl acrylates. The microgel is prepared in advance and may be added to coating compositions, e.g., epoxy resin systems of the

epihalohydrin-polyhydric phenol type, as a dry microgel powder or an aqueous suspension. Neither cycloaliphatic epoxy resins nor the sag problems associated therewith are disclosed or suggested by these patents.

Heretofore, a teaching was needed directed to solving sag problems with cycloaliphatic epoxy resin coating systems. Such coating systems are extremely high solids systems which are capable of forming durable coatings upon heat-curing, yet because of the low viscosity which becomes even lower during the heating step, prohibitive sagging occurs. These cycloaliphatic epoxy coating systems are difficult to use because multiple thin coats are needed in order to build up to a coating 25 to 51 µm (1 to 2 mils) thick. What was needed was a sag control system for these cycloaliphatic epoxy resin coating systems which can maintain the coating viscosity within a range compatible with typical coating application techniques and in particular air atomized and airless spray, especially compressed air sprayers, and at the same time enable the application of a sufficiently thick coating upon a vertical substrate without sagging. Heretofore, no teaching existed in the prior art for such a sag control system.

## SUMMARY OF THE INVENTION

This invention is based on the unexpected discovery that the addition of a low to moderate, but not high, molecular weight organic polymer, e.g., having a number average molecular weight of not more than 12,000, and having a glass transition temperature, Tg, of at least 25°C to a cycloaliphatic epoxy coating composition can provide an acceptable sag resistance in the absence of prohibitive increases in composition viscosity that results when high molecular weight sag modifying polymers are used at the same high solids content. The invention is based on the discovery that cycloaliphatic epoxy coating compositions containing a low to moderate molecular weight polymer, e.g., below 12,000, having a Tg of 25°C or more, are characterized by remarkably lower viscosities, and have equivalent or better sag resistances, than comparable compositions containing high molecular weight polymers heretofore used for sag control.

This invention describes a way to improve the sag resistance of cycloaliphatic epoxy resin coatings without reducing the solids content or rendering them so viscous as to be unsprayable. Heretofore, the control of sagging of these coatings before they cure was attempted by the addition of a high molecular weight

polymer such as cellulose acetate butyrate, but only at the cost of increasing viscosity and requiring the addition of more solvent. It has now been found that the low to moderate molecular weight organic polymers having as high a Tg as possible above 25°C can improve the sag resistance of the coating without the necessity of significantly increasing viscosity, lowering solids content or causing film properties to change.

The coating compositions of this invention can be prepared a sprayable compositions at high solids, i.e., at least 50 weight % nonvolatiles and as high as 80 to 90 weight % nonvolatiles, and can be applied to vertical surfaces to provide coatings of substantial dry film thickness, e.g., 38 to 76 µm (1.5 to 3 mils) (dry) or more, which exhibit no sagging even when elevated cure temperatures, as high as 190°C or higher, are employed to cure the coating.

The sag-resistant coating compositions of this invention are of sufficiently low viscosities, e.g., below 300 seconds (#4 Ford cup), as to be readily sprayable with conventional power spraying equipment and, nonetheless, provide applied coatings that exhibit unexpectedly high resistance to sagging induced by gravity. It is also possible by the present invention to provide cycloaliphatic epoxy coating compositions

having extremely low viscosities, e.g., of 40 seconds or less (#4 Ford cup), thereby being useful for application by compressed air sprayers and, nonetheless providing applied coatings that are unexpectedly high in sag resistance.

## DESCRIPTION OF THE INVENTION

According to the invention, sag or flow control for high solids coating compositions containing cycloaliphatic epoxy compounds is effected by adding a sag or flow control system. It has been found that sag resistance may be increased in high solids cycloaliphatic epoxy coating compositions by adding to the compositions an organic polymer having a number average molecular weight of not more than 12,000 and a glass transition temperature of 25°C or more. The cycloaliphatic epoxy is self-crosslinking and self-chain-extending to a certain extent and the addition of a crosslinking and/or chain-extending agent, hereinafter called the crosslinking/chain-extending agent, further facilitates the crosslinking, and/or chain-extension, of the cycloaliphatic epoxy and in addition helps to control sag and can provide flexibilization. The crosslinking/chain-extending of the cycloaliphatic epoxy coating composition can be further accelerated by the addition of a suitable

catalyst, such as, an onium salt and a suitable surfactant, e.g., a silicone surfactant, may be added for ease of preparation and application and to improve appearance.

The high solids, low viscosity, sprayable, sag-resistant, thermosetting coating compositions of this invention contain, on the basis of 100 weight parts of the crosslinkable/chain-extendable cycloaliphatic epoxy, 0 to 300, preferably 25 to 100, more preferably 30 to 50, weight parts of the suitable crosslinking/chain-extending agent compatible with the cycloaliphatic epoxy and capable of crosslinking and/or chain-extending the epoxy, and a sag control system comprising 5 to 40, preferably 7 to 25, weight parts of the high Tg, low to moderate molecular weight organic polymer.

The cycloaliphatic epoxy resins useful in this invention possess at least one cycloaliphatic ring per molecule and those containing two cycloaliphatic rings to the molecule are preferred. An illustration of a preferred kind of cycloaliphatic epoxy resin suitable for use in practicing the present invention is that having the structure $R-CO-O-CH_2-R$ wherein R is a cycloaliphatic ring, preferably but not necessarily a 6-membered aliphatic ring, having an epoxy oxygen atom connected to a pair of vicinal carbon atoms of each ring

thereof, with a viscosity at 25°C of 200 to 450 mPa·s (cps) and an epoxide equivalent weight of 126 to 140. The preferred cycloaliphatic epoxy is 3,4-epoxycyclohexylmethyl-3,4-epoxycyclohexyl-carboxylate.

Another resin satisfactory for the practice of the invention is that having a backbone structure of

$$R-CH_2-O-\overset{\overset{O}{\|}}{C}-(CH_2)_4-\overset{\overset{O}{\|}}{C}-O-CH_2-R$$

wherein R is a 6-member cycloaliphatic ring having an epoxy oxygen connected to a pair of vicinal carbon atoms thereof, i.e., a 3,4-epoxy-cyclohexyl group, with an epoxide equivalent weight of about 190 to 210. Such resin is sold by Union Carbide Corporation under the mark "ERLA 4299".

Another cycloaliphatic epoxy that can be used has the formula:

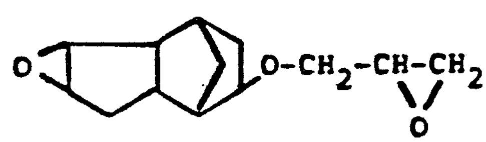

which may be designated 2,3-epoxy cyclopentane-4,-7-endomethylene cyclohexane-6-glycidyl ether. Other cycloaliphatic epoxy resins useful in this invention are diglycidyl tetrahydrophthalate, diglicidyl hexahydrophthalate, bis(2,3-epoxycyclopentyl) ether and eipchlor

hydrin-hydrogenated bisphenol A reaction products

Mixtures of 2 or more of the cycloaliphatic materials such as those described above, or mixtures of one or more of the cycloaliphatic epoxy materials and a non-cycloaliphatic epoxy material many of which are known in the art can be used.

The preferred crosslinking/chain-extending agents are polycaprolactone polyols which are described in detail in U. S.-A - 4,096,125 and polyester, polyether and polycarbonate polyols. The polycaprolactone polyols are produced by catalytic polymerization of an excess of a caprolactone and an organic polyfunctional initiator having at least two reactive hydrogen atoms. The polyols used herein can be single compounds or mixtures of compounds. The method for producing the polycaprolactone polyols is well known and the organic functional initiators may be any polyhydroxyl compound as is shown in U. S.-A - 3,169,945.

Illustrative thereof are the diols such as ethylene glycol, diethylene glycol, triethylene glycol, 1,2-propylene glycol, dipropylene glycol, 1,3-propylene glycol, polyethylene glycol, polypropylene glycol, poly(oxyethylene-oxypropylene) glycols, and similar polyalkylene glycols, either blocked, capped or heteric,

containing up to about 40 or more alkyleneoxy units in the molecule, 3-methyl-1,5-pentanediol, cyclohexanediol, 4,4'-methylene-bis-cyclohexanol, 4,4-isopropylidene-bis-cyclohexanol, xylenediol,2-(4-hydroxymethylphenyl)-ethanol, 1,4-butanediol, ; triols such as glycerol, trimethylolpropane, 1,2,6-hexanetriol, triethanolamine, triisopropanolamine, and the like, tetrols, such as erythritol, pentaerythritol, and N,N,N',N'-tetrakis(2-hydroxyethyl)ethylene diamine.

When the polyol is reacted with the caprolactone a reaction occurs that can be presented in its simplest form by the equation:

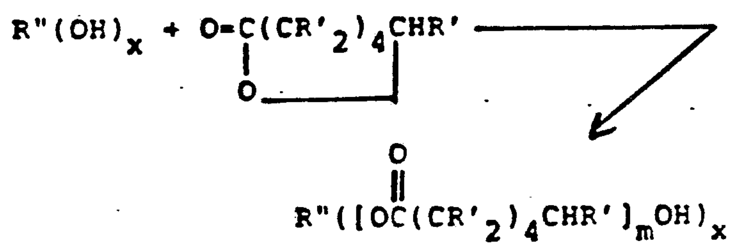

In this equation, m is a number representing the average number of repeating caprolactone derived units, x is an integer designating the number of hydroxyl groups in the polyol reactant, and R' is an alkyl, alkoxy, aryl, cycloalkyl, alkaryl or aralkyl group having up to 12 carbon atoms and at least 6 of the R' groups in the caprolactone molecule are hydrogen atoms. The polycaprolactone polyols that can be used in this

invention are shown by the formula on the right hand side of the equation; they can have an average molecular weight of from 290 to 6,000. The preferred polycaprolactone polyol compounds are those having an average molecular weight of from 290 to 3,000, more preferably from 300 to 1,000. The preferred polycaprolactone polyol-crosslinking/chain-extending agents are the polycaprolactone diol compounds having an average molecular weight of from 290 to 500 and the polycaprolactone triol compounds having an average molecular weight of from 300 to 1,000; these being preferred because of their low viscosity properties. The hydroxyl number of the polycaprolactone polyol can be from 15 to 600, preferably from 200 to 500; and the polycaprolactone polyol can have an average of from 2 to 6, preferably 2 to 4, hydroxyl groups.

Illustrative of polycaprolactone polyols that can be used as crosslinking agents in this invention there can be mentioned the reaction products of a polyhydroxyl compound having an average of from 2 to 6 hydroxyl groups and the caprolactone. In the following table there are listed illustrative polycaprolactone polyols useful as crosslinking/chain-extending agents in this invention. The first column lists the organic

functional initiator that is reacted with the caprolactone and the average molecular weight of the polycaprolactone polyol is shown in the second column. Knowing the molecular weights of the initiator and of the polycaprolactone polyol one can readily determine the average number of molecules of caprolactone (CPL Units) that reacted to produce the compound; this figure is shown in the third column.

POLYCAPROLACTONE POLYOLS

| Initiator | Average MW of Polyol | Average No. of CPL Units in Molecules |
|---|---|---|
| 1 Ethylene glycol | 290 | 2 |
| 2 Ethylene glycol | 803 | 6.5 |
| 3 Ethylene glycol | 2,114 | 18 |
| 4 Propylene glycol | 874 | 7 |
| 5 Octylene glycol | 602 | 4 |
| 6 Decalence glycol | 801 | 5.5 |
| 7 Diethylene glycol | 527 | 3.7 |
| 8 Diethylene glycol | 847 | 6.5 |
| 9 Diethylene glycol | 1,246 | 10 |
| 10 Diethylene glycol | 1,998 | 16.6 |
| 11 Diethylene glycol | 3,526 | 30 |
| 12 Triethylene glycol | 754 | 5.3 |
| 13 Polyethylene glycol (MW 200)* | 713 | 4.5 |
| 14 Polyethylene glycol (MW 600)* | 1,398 | 7 |
| 15 Polyethylene glycol (MW 1500)* | 2,868 | 12 |
| 16 1,2-Propylene glycol | 646 | 5 |
| 17 1,3-Propylene glycol | 988 | 8 |
| 18 Dipropylene glycol | 476 | 3 |
| 19 Polypropylene glycol (MW 425)* | 835 | 3.6 |
| 20 Polypropylene glycol (ME 1000)* | 1,684 | 6 |
| 21 Polypropylene glycol (MW 2000)* | 2,456 | 4 |
| 22 Hexylene glycol | 916 | 7 |
| 23 2-Ethyl-1,3-hexanediol | 602 | 4 |
| 24 1,5-Pentanediol | 446 | 3 |
| 25 1,4-Cyclohexanediol | 629 | 4.5 |
| 26 1,6-Bis(hydroxyethyl)-benezene | 736 | 5 |
| 27 Glycerol | 548 | 4 |
| 28 1,2-6-Hexanetriol | 476 | 3 |
| 29 Trimethylolpropane | 590 | 4 |
| 30 Trimethylolpropane | 750 | 5.4 |
| 31 Trimethylolpropane | 1,103 | 8.5 |
| 32 Triethanolamine | 890 | 6.5 |
| 33 Erythritol | 920 | 7 |
| 34 Pentaerythritol | 1,219 | 9.5 |

* = Average molecular weight of glycol

The preferred crosslinking/chain-extending agent is a polycaprolactone triol having an average molecular weight of about 900 and an average hydroxyl number of 187.

The sag control system of the present invention comprises an organic polymer which may be any organic polymer (1) that is not incompatible with the cycloaliphatic epoxy, crosslinking/chain-extending agent or any other component of the coating composition, (2) that has a glass transition temperature (Tg) of at least 25°C, e.g., 25°C to 250°C, preferably at least 30°C, more preferably from 30°C to 150°C, and (3) that has a molecular weight of not more than 12,000, preferably not more than 8,000, but not so high a Tg or molecular weight that solutions or dispersions containing the polymer, as in the coating compositions, are too viscous for application to and flowing onto a substrate or are too viscous for spraying onto a substrate. The molecular weight of suitable organic polymers can range from 1,000 to 12,000 , preferably 1,000 to 8,000, and the glass transition temperature can range from 25°C to 250°C, preferably 30°C to 150°C.

Suitable for use as the organic polymer constituent in the present invention are the vinyl polymers having a Tg ranging from 25°C up to the Tg at which the vinyl

polymer renders the coating composition, in which it is contained, too viscous for application to and flowing on a substrate or are too viscous for spraying. The number average molecular weight of suitable vinyl polymers range from 1,000 up to 12,000, preferably 8,000, or up to the maximum number average molecular weight at which, for the Tg of the vinyl polymer, coating compositions containing same can be applied to and flowed on the substrate to be coated or can be applied by spraying.

Copolymers of vinyl acetate and vinyl chloride are also useful in this invention to reduce sag in cycloaliphatic epoxy coating compositions. Preferably, the vinyl copolymers can have an average molecular weight of 1,000 to no more than 12,000, preferably no more than 8,000, the vinyl chloride content of the polymers may range preferably from 67 wt. % to 90 wt. % and the vinyl acetate content preferably ranges from 4 wt. % to 14 wt. %. Additionally, the vinyl copolymers should have a hydroxyl content of 2% to 3.5%. Technically, these polymers can be considered to be terpolymers of vinyl chloride, vinyl acetate and an epoxy-containing monomer or a hydroxy-containing monomer, e.g., vinyl alcohol or a hydroxyl alkyl acrylate with the hydroxyls being carried on the vinyl

monomer. Suitable vinyl copolymers are available commercially from Union Carbide Corporation under the designations UCAR Solution Vinyl Resins, VROH, VYES, VMCA, VYLF and VYNC.

One well known method for making the vinyl copolymers (although this is not the only method to produce vinyl copolymers useful in this invention) is to polymerize a heterogeneous mixture of substituted ethylenes, i.e., the vinyl monomer, such as, vinyl chloride and vinyl acetate, using an initiator such as a peroxide. The peroxide functions by breaking down to form a free radical. This free radical adds to a molecule of vinyl monomer and in doing so generates another free radical. This free radical adds to still another molecule of vinyl monomer to generate a still larger radical which, in turn, adds to another molecule of vinyl monomer and so on. Eventually the chain is terminated by steps, such as the union of two radicals, that consume but do not generate radicals. This is known as chain-reaction polymerization. It is also conceivable that chain-reaction polymerization may proceed, not by way of free radicals, but by way of organic ions, or within the coordination sphere of a transition metal complex.

Other relatively high Tg, relatively low molecular weight organic polymers useful in the present invention are the styrene-alkyl alcohol copolymers such as those marketed by Monsanto Chemical Company under the trademarks RJ100 and RJ101 which respectively have number average molecular weights of 1,600 and 1,150, Tg's of about 100°C and 101°C, 12.3 and 8.3 moles of polymerized styrene per mole of copolymer, and hydroxyl contents of 5.7 wt. % and 7.7 wt. %.

Other relatively low or low to moderate molecular weight polymers are the acrylic polymers in an appropriate solvent such as those sold by Polyvinyl Chemicals, Inc. under the designation NeoCryl DP-201. Also, the skilled polymer chemist is able to produce other acrylic polymers from monomers such as acrylic acid, methacrylic acid, methyl methacrylate, methyl acrylate, ethyl, propyl and butyl acrylates and methacrylates and further has the knowledge and means enabling him to control the Tg and number average molecular weight within the parameters described hereinabove.

Other low or low to moderate molecular weight polymers having a Tg of 25°C or greater, preferably 30°C or greater, include the polyesters made by addition polymerization of polycarboxylic acids and/or anhydrides

with polyhydric alcohols or polyols; the polyamides, e.g., the nylons; polyacetals; phenol-aldehyde polymers; urea-aldehyde polymers; polyurethanes; acrylonitrile and methacrylonitrile polymers and copolymers, styrene polymers and copolymers, isobutylene copolymers, and polymers and copolymers, and any other monomer capable of producing polymers or copolymers having a number average molecular weight of not more than 12,000 and a Tg of 25°C or more. The prior art contains sufficient teachings to enable the skilled polymer chemist to prepare suitable organic polymers having the Tg and molecular weight properties needed for use in this invention.

The cycloaliphatic epoxy coating compositions of this invention have nonvolatile contents of 50 wt. % or more, preferably 70 wt. % or more, and more preferably 80 wt. % or more. The inventive coating compositions contain one or more liquid organic solvents which of course are present in amounts up to 50 wt. %, preferably up to 30 wt. %, and more preferably up to 20 wt. %. The term "organic solvent" is employed in a broad sense and is intended to include true solvents as well as liquid diluents for the crosslinkable/chain-extendable cycloaliphatic epoxy resins and optional crosslinking/chain-extending agent which may

not be true solvents but are miscible with and provide a diluent and vehicle for the cycloaliphatic epoxy and optional crosslinking/chain-extending agent. The solvent system employed in this invention generally is organic. It may be a single compound or a mixture of compounds. When the solvent system contains more than one organic liquid solvent, such solvents can be selected from fast, medium speed and slow solvents in order to provide the desired drying properties to the novel coating composition. For example, too fast a solvent in a coating composition could result in the volatilization of the solvent too rapidly and the application of a dry, non-flowing powder to the substrate. The skilled worker is sufficiently knowledgeable to replace some of the fast solvent with a slower one. The relationship between the solvent system and the crosslinkable/chain-extendable cycloaliphatic aliphatic epoxy depends upon the absolute and relative natures of these materials and upon the relative amounts used. Such factors as solubility, miscibility, polarity, hydrophilicity, hydrophobicity, lyophilicity and lyophobicity are some of the factors which may be considered. Illustrative of suitable components of the solvent system which may be employed are alcohols such as lower alkanols containing 1 to 8 carbon atoms

including methanol, ethanol, propanol, isopropanol, butanol, sec-butyl alcohol, tert-butyl alcohol, amyl alcohol, hexyl alcohol, cyclohexanol and 2-ethylhexyl alcohol; ethers and ether alcohols such as diethyl ether, ethylene glycol monoethyl ether, ethylene glycol monobutyl ether, ethylene glycol dibutyl ether, propylene glycol monomethyl ether, diethylene glycol monobutyl ether, diethylene glycol dibutyl ether, dipropylene glycol monoethyl ether, and dipropylene glycol monobutyl ether; ether esters, glycol ether esters; ketones such as acetone, diisobutyl ketone, methyl ethyl ketone, methyl isobutyl ketone, methyl amyl ketone and methyl N-butyl ketone; esters such as butyl acetate, hydroxyethyl acetate, 2-ethoxyethyl acetate and 2-ethylhexyl acetate, aliphatic and alicyclic hydrocarbons such as the various petroleum naphthas and cyclohexane, aromatic hydrocarbons such as toluene and xylene.

The amount of organic solvent present in the inventive coating dispersion can be 50 wt. % or less, preferably 20 wt. % or less and, most preferably less than 10% by weight, based on the total weight of the composition. As discussed above, a unique feature of the coating composition of this invention is the ability to formulate coating compositions containing

smaller amounts of organic solvent than conventional dispersions of film-forming resins. It is most preferred therefore that the organic solvent be used in as small quantities as possible, i.e., that amount just sufficient to dissolve the film-forming resin or provide sufficient fluidity to the composition to enable reasonably facile application, by power spraying, compressed air spraying or otherwise, of the composition to form a coating on a substrate.

In addition to the above-described ingredients for the cycloaliphatic epoxy coating compositions of this invention, other ingredients may be desirable such as catalysts to accelerate curing, i.e, crosslinking/chain-extending, and surfactants for ease of preparation and application of the novel coating compositions. A preferred catalyst for the inventive coating compositions is diethylammonium-triflate having the formula:

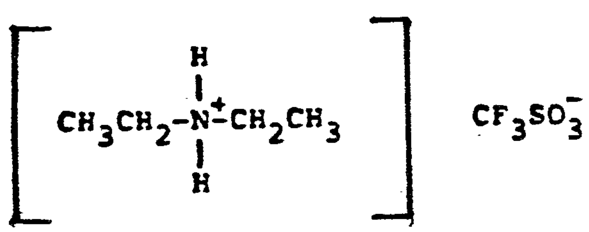

The Minnesota Mining and Manufacturing Corporation is a commercial supplier for this catalyst which is marketed under the proprietary designation FC-520. Any other suitable catalyst can be used, including other triflic

acid salts, onium salts, boron trifluoride and other Lewis acid catalysts.

The preferred surfactant is polyalkyleneoxide-polymethylsiloxane copolymer which is a silicone surfactant. It has a boiling point of 1 bar in excess of 150°C, a freezing point of less than 0°C, a specific gravity of 1.038 at 25°C, a vapor pressure at 23°C of less than 1.33 mbar (1 mm of mercury). Its vapor density is greater than 1 and its solubility in water is complete. It is a clear, amber liquid which has a mild polyether odor. This copolymer surfactant is a mixture of 80 wt. % polyalkyleneoxide-polymethylsiloxane copolymer and 20% ethylene glycol and is available from Union Carbide Corporation as Union Carbide Silicone Surfactant L-5410. Any other surfactant, of which there are many, that is not incompatible with any of the ingredients of the novel coating compositions can be used in place of Silicone Surfactant L-5410.

The [illegible] coating compositions of this invention can contain other ingredients such as participating reaction accelerators, fireproofing agents, flame-retardants, coloring agents, dyes, pigments, fillers, or any other materials for providing special effects. The types and relative amounts of such

materials for providing said special effects are well known.

The coating compositions of this invention are made by simply mixing all the ingredients at room temperature, whereupon the coating composition is ready for application to a substrate. It is preferred, however, to mix the cycloaliphatic epoxy and crosslinking/chain-extending agent. A solution of the organic polymer in an organic liquid or diluent is prepared, e.g., to produce a 40 wt. % nonvolatile solution, which is then mixed with the cycloaliphatic epoxy-crosslinking/chain-extending agent mixture and agitated to produce a uniform coating composition. The catalyst, surfactant and any other additives can be introduced into the composition or its ingredients at any stage. Two package systems can also be utilized for lower temperature and ambient cure coatings.

The inventive coating compositions can be applied to the substrate in any convenient way. For example, the coating compositions can be brushed, rolled or sprayed onto the substrate or the substrate can be dipped into the coating compositions, which are also suited for compressed air spraying or airless power spraying.

Once applied to a substrate, heat is usually used to initiate crosslinking/chain-extending of the coating compositions into hard, durable, fully cured coatings. Heating times and temperatures can be widely varied. For example, curing temperatures of 50°C to 260°C, preferably 80°C to 150°C. Curing times can be widely varied and typically range from 10 minutes at the temperatures in the upper end of the range to 30 minutes or an hour or more at the lower temperatures in the range.

The following examples are presented. Numbered examples typify the invention while lettered examples do not and are presented for comparative purposes. In the examples, "N.V." designates "nonvolatiles", "Tg" designates glass transition temperature, "wt. %" designates percent by weight unless otherwise designated. In Examples A, B, C, E, G and H additional xylene solvent was added in the amounts shown in Tables I, II and III in order to reduce the nonvolatiles content to 80 percent for comparison with the other examples at about this level of nonvolatiles content.

In the examples the following designations are used to identify the materials described below:

Epoxy Resin: 3,4-epoxycyclohexylmethyl 3,4-epoxycyclohexanecarboxylate.

Crosslinking Agent 0310: polycaprolactone triol having a number average molecular weight of 900 and an average hydroxyl number of 187, measured in milligrams of potassium hydroxide per gram functioning as a crosslinking and/or chain-extending agent. (Tone 0310 sold by Union Carbide Corporation).

Crosslinking Agent 0200: polycaprolactone diol having a number average molecular weight of 530 and an average hydroxyl of 212 functioning as a crosslinking and/or chain-extending agent. (Tone 0200 sold by Union Carbide Corporation).

CAB-0.01: cellulose acetate butyrate containing 2 wt. % acetyl groups and 53 wt. % butyryl groups (ASTM D817) and having a number average molecular weight of 16,000 and a Tg of 85°C.

CAB-0.2: cellulose acetate butyrate containing: 2 wt. % acetyl groups and 52 wt. % butyryl groups (ASTM D817) and having a number average molecular weight of 30,000 and a glass transition temperature, Tg, of 101°C. (CAB-551-0.2 sold by Eastman Kodak Company).

RJ-100: copolymer of styrene and allyl alcohol having a number average molecular weight of 1,600, 5.3 moles of hydroxyl groups per mole of copolymer and 12.3

moles of styrene per mol of copolymer and believed to have a Tg of 100. (Sold by Monsanto Chemical Company).

DP-201: high solids, 64 wt. %, solution of an acrylic copolymer in a solvent comprising 20 wt. % toluene and 80 wt. % methyl n-propyl ketone. The acrylic copolymer has a glass transition temperature of about 55°C and a Brookfield viscosity at 25°C of 700 mPa·s (cps). Prior to use in this invention, the toluene:methyl n-propyl ketone solvent was exchanged with a methyl ethyl ketone as solvent to produce a 64.1 wt. % solution of the acrylic copolymer in methyl ethyl ketone.

VYES: terpolymer of 67 wt. % vinyl chloride, 11 wt. % vinyl acetate and hydroxyl-containing comonomer to provide 3 wt. % hydroxyl group and having a number average molecular weight of 4,000 and a Tg of 40°C. (UCAR Solution Vinyl Resin VYES).

VERR: terpolymer of vinyl chloride, vinyl acetate and an epoxy-containing comonomer to provide 1 wt. % epoxy groups and having a number average molecular weight of 11,000 and a Tg of 70°C. (UCAR Solution Vinyl Resin VERR).

VYHH: copolymer of 86 wt. % vinyl chloride and 14 wt. % vinyl acetate having a number average molecular weight of 20,000 and a Tg of 72°C. (UCAR Solution Vinyl Resin VYHH).

<u>VMCH</u>: terpolymer of 86 wt. % vinyl chloride, 13 wt. % vinyl acetate and 1 wt. % maleic acid having a number average molecular weight of 21,000 and a Tg of 74°C. (UCAR Solution Vinyl Resin VMCH).

<u>VAGH</u>: terpolymer of 90 wt. % vinyl chloride, 4 wt. % vinyl acetate and hydroxyl-containing comonomer to provide 2.3 wt. % hydroxyl groups and having a number average molecular weight of 23,000 and a Tg of 79°C. (UCAR Solution Vinyl Resin VAGH).

<u>Catalyst</u>: diethylammonium triflate having the formula:

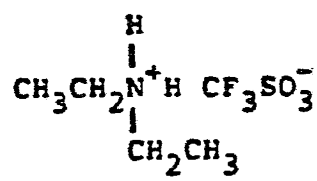

(FC-520 sold by 3M).

<u>Surfactant</u>: poly(alkyleneoxide-methylsiloxane), 80 wt. %, and ethylene glycol, 20 wt. %. (Union Carbide Silicone Surfactant L-5410).

In the examples the following measurements and tests were performed in the manner described below:

<u>Viscosity</u>: The viscosity measurements were performed using a No. 4 Ford cup which is a cup with a hole in the bottom. Material to be measured was added to the cup and the period of time it takes for the

material to drain through the hole was measured in seconds. The Ford cup rating in seconds is roughly comparable to centipoise by multiplying the Ford rating by 3.5. The higher drainage times indicate higher viscosities. A viscosity of 40 seconds or less is required if the material is to be applied by compressed air spraying. Materials having a viscosity up to 270 seconds or 300 seconds can be power sprayed, although with some difficulty at the higher viscosities of 270 to 300 seconds.

Sag Resistance: Sag resistance was measured with a Leneta sag bar. Leneta bars provided with gaps having increasing ratings (in μm) may be used on the coated surface to determine the widest gap which does not result in sagging of the coating. Measurements were made after a specified period of heating at a specified temperature. The higher sag resistance ratings designate the better sag resistance and a sag resistance of 76 (3) is acceptable. A sag resistance of less than 76 (3) or of a borderline 76 (3) are not acceptable in providing the advantage of this invention.

MEK Rubs: MEK Rubs is a semi-quantitative test which was performed by manually rubbing a cloth soaked with methyl ethyl ketone across the surface of the cured

coated structure while applying moderate pressure. One MEK Rub consisted of one back-and-forth motion across the surface. Greater than 100 rubs without the appearance of the coating upon the rag is considered an adequate coating.

Hardness: The coating hardness test is a quantitative test for determining resilience and hardness of the coating. Essentially a rocking device called a Sward hardness device was set in motion upon the coated surface and the degree of motion-damping which the coated surface contributes to the rocking motion of the device is the measure of hardness. The measurements given in Table I through III are the Sward hardness rating, the higher the number, the harder is the coating.

Mandrel Bend: The mandrel bend test is a test designed to determine the flexibility of the coating. The mandrel is a rod having a diameter around which was bent a substrate having coated thereon the cured coating being tested. The rating given each coating in Tables I through III below is the smallest diameter in mm (inches) around which the coating and substrate at 0°C could be bent and not exhibit cracking or flaking of the coating. The lower numbers indicate more flexible coatings.

Examples 1-3 and A-E

In each example 50.7 wt. parts of the epoxy resin and 16.9 wt. parts of the Crosslinking Agent 0310 were mixed to provide a uniform mixture. In each example the organic polymer was dissolved in methyl ethyl ketone to produce a solution containing 40% nonvolatiles, except in Example 1 wherein 15 wt. parts of R-J100 was mixed with 25 parts of methyl ethyl ketone forming a 37.5 wt. % N.V. solution, and, in each case, 31.8 wt. parts of the resulting solution were mixed with the epoxy resin-crosslinking agent mixture, except in Example D 11.9 wt. parts of the VAGH solution was mixed and in Example E 29.8 wt. parts of the CAB-0.2 solution was mixed with the epoxy resin-crosslinking agent mixture. In Example D 19.9 wt. parts of methyl ethyl ketone were added to the mixture and in Example E 2 wt. parts of xylene were added to the mixture. In addition, 0.4 wt. parts of diethylammonium triflate catalyst and 0.2 wt. parts silicone surfactant (both identified above) were added to the mixture of each example and the resulting coating compositions were made uniform by stirring. In Examples 2, 3, A, B, C and E the nonvolatile content was 80 wt. %, and in Example D the nonvolatile content was 73 wt. %.

The viscosity and sag resistance of the coating composition of each example were measured and are respectively given in Table I along with the number average molecular weight and Tg of each organic polymer used in each example. In measuring sag resistance, each coating was applied in different thicknesses to a 510 µm (20 mil) thick aluminum panel by drawing down with a Leneta bar. After application and drawing down, each coated panel was allowed to sit horizontally for about 10 minutes at room temperature and then placed vertically in an oven where it was maintained at 190°C for 10 minutes.

Thereafter, additional amounts of each coating composition were applied to aluminum panels which were maintained at 121°C for 30 minutes in an oven. The film properties of the cured coatings were measured, and the results are listed in Table I.

TABLE I

| Ex. No. | Organic Polymer | M.W. | Tg, °C | Sag Resistance µm | (mil) | #4 Ford Cup Visc., s. | Hard-Ness | Mandrel Bend mm | (in) |
|---|---|---|---|---|---|---|---|---|---|
| 1 | RJ-100 | 1600 | 100 | 76 | (3) | 19 | 70 | 3.175 | (1/8) |
| 2 | VYES | 4000 | 40 | 76 | (3) | 34 | 116 | 6.35 | (1/4) |
| 3 | VERR | 11000 | 70 | 127 | (5) | 192 | 98 | 15.875 | (5/8) |
| A | CAB-0.1 | 16000 | 85 | 76 | (3*) | 59 | 98 | 6.35 | (1/4) |
| B | VYHH | 20000 | 72 | 76 | (3) | 246 | 104 | 3.175 | (1/8) |
| C | VMCH | 21000 | 74 | 102 | (4) | 329 | 86 | 3.175 | (1/8) |
| D | VAGH | 23000 | 79 | 127 | (5) | 392 | 90 | 12.7 | (1/2) |
| E | CAB-0.2 | 30000 | 101 | 76 | (3) | 396 | 128 | 3.175 | (1/8) |

* Borderline 3

The results given in Table I demonstrate the effects of the present invention in providing low viscosity coating compositions having good to excellent sag resistance when using low to medium molecular weight, i.e., below 12,000, organic polymers having high Tg, i.e., 25°C and above, whereas the high molecular weight polymers previously thought to be essential for sag resistance all provided coating compositions which are unacceptable for compressed air spraying and are mostly unacceptable for power spraying because of high

viscosities which, except for Example B, were over 300 seconds.

Examples 4, 5, F, G, H and K

In each example, the epoxy resin and crosslinking agent were mixed in the proportions given in Table II to provide a uniform mixture. In Examples 4, 5, F, G and H, the low molecular weight vinyl polymer, VYES was dissolved in methyl ethyl ketone to produce a solution containing 40 wt. % nonvolatiles and the resulting vinyl copolymer solution was mixed with the epoxy resin-crosslinking agent mixture in the respective proportions given in Table II. In addition, the catalyst, surfactant and, in the case of Example K, additional solvent were added to the resulting mixtures in the proportions set forth in Table II. Thereafter, the mixture was blended to provide a uniform coating composition. The nonvolatile content of each of the mixtures was 80 wt. %, except that the mixture of Example H was 90 wt. % nonvolatiles.

The viscosity and sag resistance of the coating composition of each example were measured and are respectively presented in Table II. In carrying out the sag resistance tests, the coating composition of each example was applied to an aluminum panel which was about 508 μm (20 mils) in thickness using a Leneta bar. Each panel was coated with different thicknesses of each coating composition and was kept in a horizontal position for 10

minutes at ambient temperature and then placed in a vertical position in an oven where it was kept at 190°C for 10 minutes. Each panel was inspected for sag and the thickest sag-free coating for each composition was recorded and is presented in Table II. In addition, each coating was applied to an aluminum panel in approximately the same thicknesses in each case and was baked for 10 minutes at 190°C. Thereafter, the film properties of each cured coating were measured and the results are presented in Table II.

TABLE II

| Example | F | G | 4 | 5 | H | K |
|---|---|---|---|---|---|---|
| Epoxy Resin: 100% N.V. | 33.8 | 33.8 | 50.8 | 50.8 | 71.3 | 59.6 |
| Crosslinking Agent 0310: 100% N.V. | 33.8 | - | - | 16.9 | - | 19.8 |
| Crosslinking Agent 0200: 100% N.V. | - | 33.8 | 16.9 | - | - | - |
| Vinyl Copolymers VYES: 40% N.V. | 31.8 | 31.8 | 31.8 | 31.8 | 27.9 | - |
| Catalyst: 100% N.V. | 0.4 | 0.4 | 0.4 | 0.4 | 0.6 | 0.5 |
| Surfactant: 100% N.V. | 0.2 | 0.2 | 0.2 | 0.2 | 0.2 | 0.2 |
| Solvent (MEK) | - | - | - | - | - | 20.0 |
| % Nonvolatiles | 80 | 80 | 80 | 80 | 90 | 80 |
| Viscosity in seconds | 40 | 29 | 27 | 34 | 29 | 14 |
| Sag Resistance µm (mil) | <76 (<3) | <76 (<3) | 76 (3) | 76 (3) | <76 (<3) | <76 (<3) |
| Film Properties | | | | | | |
| MEK Rub | >100 | >100 | >100 | >100 | >100 | >100 |
| Hardness | 36 | 16 | 114 | 116 | 72 | 86 |
| Mandrel Bend mm (in) | 3.175 (1/8) | 3.175 (1/8) | 6.35 (1/4) | 6.35 (1/4) | >25.4 (>1) | 3.175 (1/8) |

The results given in Table II (Examples 4 and 5) demonstrate the effectiveness of the low molecular weight vinyl copolymer, VYES, having moderately high Tg in providing sag resistant coating compositions that are sprayable with compressed air equipment. The

compositions of Examples F, G and H can be modified by the addition of more vinyl copolymer, VYES, to improve sag resistance to the 3 level or above and still be usable in power spraying equipment.

Example 6

In this example 49.3 wt. parts of the epoxy resin and 16.4 wt. parts of Crosslinking Agent 0310 were mixed to provide a uniform mixture. The acrylic copolymer solution DP-201 (64.1 wt. % solids in MEK) was prepared and mixed, in the amount of 18.1 wt. parts, with the epoxy resin-crosslinking agent mixture. In addition, 12.8 wt. parts of methyl ethyl ketone, 3.1 wt. parts of the diethylammonium triflate catalyst and 0.2 wt. parts silicone surfactant (both identified above) were added to the mixture and the resulting coating composition was made uniform by stirring and had 80.6 wt. % nonvolatiles.

The viscosity and sag resistance of the coating composition were measured and found to be 76 (3) for sag resistance and 27 seconds for viscosity. In measuring the sag resistance, the coating composition was applied in different thicknesses to a 508 μm (20 mil) thick aluminum panel by drawing down with a Leneta bar. After application and drawing down, each coated panel was allowed to sit horizontally for about 10 minutes at room temperature and then placed vertically in an oven where it was maintained at 190°C for 10 minutes.

Thereafter, additional amounts of the coating composition were applied to aluminum panels which were

maintained at 121°C for 30 minutes in an oven. The film properties of the cured coating were measured and the results are listed in Table III below.

TABLE III

| Film Properties | |
|---|---|
| MEK Rubs | >100 |
| Hardness | 42 |
| Mandrel Bend | 12.7 mm (1/2 in) |

WHAT IS CLAIMED IS:

1. A thermosetting, sag-resistant coating composition comprising at least 50 wt. % nonvolatiles comprising:

(a) a crosslinkable cycloaliphatic epoxy containing at least one cycloaliphatic ring,

(b) a crosslinking/chain-extending agent compatible with and capable of crosslinking and/or chain-extending said epoxy,

(c) a sag control system comprising an organic polymer having a glass transition temperature of at least 25°C and a number average molecular weight of not more than 12,000, and

(d) a catalyst.

2. The composition of claim 1 comprising:

(a) 100 weight parts of the crosslinkable cycloaliphatic epoxy containing at least one cycloaliphatic ring,

(b) 0 to 300 weight parts of the crosslinking chain-extending agent compatible with and capable of crosslinking and/or chain-extending said epoxy, and

(c) the sag control system comprising 5 to 40

weight parts of an organic polymer having a glass transition temperature of at least 25°C and a number average molecular weight of not more than 12,000, and

(d) the catalyst.

3. Composition as claimed in claim 1 or 2 wherein said organic polymer has a number average molecular weight of 1,000 to 12,000 or of 1,000 to 8,000 and a glass transition temperature of 25°C to 250°C or of 30°C to 150°C.

4. Composition as claimed in claims 1 to 3 wherein the epoxy is 3,4-epoxycyclohexylmethyl-3,4-epoxycyclohexyl-carboxylate.

5. Composition as claimed in claims 1 to 3 wherein the crosslinking agent is a polyol.

6. Composition as claimed in claim 5 wherein the crosslinking agent is also a flexibilizing agent.

7. Composition as claimed in claim 5 or 6 wherein the polyol is a polycaprolactone polyol having an average molecular weight of from 290 to 6,000 and an average hydroxyl number of 15 to 600.

8. Composition as claimed in claim 7 wherein the

polycaprolactone has an average molecular weight of about 900 and an average hydroxyl number of about 187.

9. Composition as claimed in claims 1 to 8 wherein the organic polymer is a vinyl polymer, preferably a terpolymer of vinyl chloride, vinyl acetate, and a hydroxy-containing monomer or a copolymer of vinyl chloride and vinyl acetate.

10. Composition as claimed in claims 1 to 8 wherein the organic polymer is a copolymer of styrene and allyl alcohol.

11. Composition as claimed in claims 1 to 10 further comprising a Lewis acid catalyst.

12. Composition as claimed in claims 1 to 10 wherein the catalyst is an onium salt catalyst, preferably diethylammoniumtriflate.

13. Composition as claimed in claims 1 to 12 further comprising a silicone surfactant.

14. Composition as claimed in claim 2 comprising at least 50 weight percent nonvolatiles comprising:

(a) 100 weight parts of the crosslinkable cycloaliphatic epoxy,

(b) 25 to 100 weight parts of the crosslinking agent, and

(c) 5 to 40 weight parts of the organic polymer.